(19) Europäisches Patentamt
European Patent Office
Office européen des brevets

(11) Numéro de publication : **0 222 804 B1**

(12) # FASCICULE DE BREVET EUROPÉEN

(45) Date de publication du fascicule du brevet : **30.08.89**

(51) Int. Cl.[4] : **C 13 F 3/00**, C 13 F 3/02, A 23 L 1/236, A 23 L 1/09

(21) Numéro de dépôt : **86902845.6**

(22) Date de dépôt : **07.05.86**

(86) Numéro de dépôt international : **PCT/FR 86/00158**

(87) Numéro de publication internationale : **WO/8606747 (20.11.86 Gazette 86/25)**

(54) **INCORPORATION DE L'ASPARTAME DANS UN ALIMENT CONTENANT DU SUCRE.**

(30) Priorité : **07.05.85 FR 8506949**

(43) Date de publication de la demande : **27.05.87 Bulletin 87/22**

(45) Mention de la délivrance du brevet : **30.08.89 Bulletin 89/35**

(84) Etats contractants désignés : **AT BE CH DE FR GB IT LI LU NL SE**

(56) Documents cités :
EP–A– 0 102 032
EP–A– 0 106 910
EP–A– 0 109 771
FR–A– 2 245 299

(73) Titulaire : **BEGHIN-SAY SOCIETE ANONYME**
**F-59239 Thumeries (FR)**

(72) Inventeur : **LERAILLER, Eric**
**8, allée Le Notre**
**F-77200 Lognes (FR)**
Inventeur : **THIRIET, Bernard**
**42, av. de la Terrasse**
**F-91260 Juvisy S/Orge (FR)**
Inventeur : **WACQUEZ, Jean**
**4, av. du 11 novembre**
**F-92400 Courbevoie (FR)**

(74) Mandataire : **David, Daniel et al**
**KAYSERSBERG Service Propriété Industrielle 54, avenue Hoche**
**F-75008 Paris (FR)**

EP 0 222 804 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne les produits alimentaires moulés dont le sucre est le principal constituant, et se rapporte, à un procédé permettant d'y incorporer une substance telle que l'aspartame ou une autre substance présentant des propriétés physico-chimiques semblables, notamment sa faible solubilité, tout en garantissant un résultat homogène.

L'aspartame, en abrégé APM, est un très bon édulcorant dont le profil est proche de celui du sucre. C'est un produit organique de structure C4 H18 N2 05, PM = 294

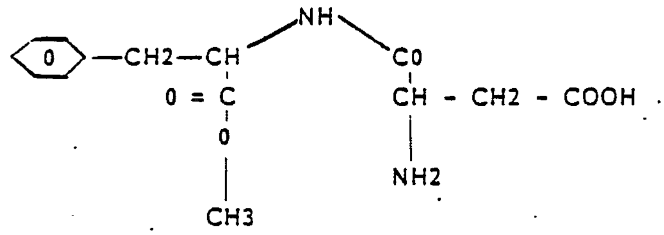

Son pouvoir sucrant, 180 à 200 fois celui du sucrose, le fait rechercher en tant que remplaçant de ce dernier au plan diététique.

Cependant certaines de ses propriétés peuvent en limiter ses possibilités d'incorporation dans les produits alimentaires.

— Sa solubilité dans l'eau est faible, elle varie avec le PH et la température. Pour les PH de 4 à 5, où il est le plus stable, la solubilité est de 3 % à 50 °C, 0,7 % à 20 °C ; ainsi 100 litres d'eau sont nécessaires pour solubiliser 700 g d'APM équivalents à 126 kg de pouvoir sucrant exprimé en saccharose.

— Sa stabilité est mauvaise dans les zones de PH très acide ou très basique.

— Son pouvoir sucrant élevé en rend le dosage délicat ; celui-ci doit rester toutefois précis.

— Il devient collant à l'humidité et sa tendance à former des agglomérats même sous forme de poudre est manifeste.

Ces inconvénients ont pour conséquence une grande difficulté de mise en œuvre pratique dans les applications alimentaires, et en particulier quand il s'agit de produits moulés.

En effet, ces produits alimentaires se présentent initialement sous forme de poudres dans lesquelles on peut tenter d'incorporer directement une quantité d'APM dosée avec précision. Mais cette opération est délicate et une source de nombreuses difficultés ; il se forme des aérosols, la répartition est difficilement homogène, et il se produit un collage lors de l'introduction ultérieure d'eau en quantité limitée.

On a cherché alors à préparer une solution ou une suspension d'APM dans l'eau pure que l'on dilue ultérieurement dans la poudre solide, de sucre par exemple. Mais on obtient soit une solution de concentration trop faible à cause de la grande quantité d'eau nécessaire pour en assurer la solubilisation totale, soit dans le cas d'une suspension, un mastic collant non manipulable interdisant tout emploi ultérieur.

L'invention a pour objet un procédé permettant une incorporation aisée de l'aspartame, ou de toute autre substance présentant des propriétés physico-chimiques semblables, dans un produit alimentaire moulé à base de sucre cristallisé, grâce auquel les problèmes mentionnés ci-dessus sont éliminés et garantissent une répartition homogène de l'APM.

Conformément à l'invention, le procédé consiste à réaliser une suspension homogène de la substance dans un sirop de sucre dont la concentration est comprise entre 60 % et 100 % de la saturation, à mélanger cette suspension avec du sucre cristallisé, et à mouler en morceaux et étuver le mélange obtenu, selon la technique sucrière connue en soi, l'eau dans le mélange étant apportée essentiellement par le sirop en quantité correspondant aux nécessités du moulage et le dosage de la substance dans la suspension étant déterminé en fonction de son dosage dans les morceaux.

Les avantages résultant du procédé se retrouvent dans la dispersion très homogène de la substance dans les morceaux, dans sa simplicité de mise en œuvre au regard de la précision avec laquelle la substance est distribuée dans les morceaux et dans le respect de la qualité des cristaux dont on évite l'érosion.

On connaît la demande de brevet EP 106910 qui se rapporte à du sucre en morceaux contenant entre 0,3 et 30 % d'aspartame. Toutefois, le mode de fabrication mentionné consiste à mélanger simplement les ingrédients ensemble sans précaution particulière.

On connaît également la demande de brevet EP 102032 qui concerne un agent édulcorant constitué par de l'aspartame en suspension dans un agent dispersant liquide pouvant être de l'eau ou un sirop. Le mode de préparation proposé consiste à simplement mélanger ensemble les composants, ou bien à réaliser une première suspension de l'aspartame dans l'eau puis à compléter celle-ci avec l'agent dispersant, ce qui permet de limiter la formation de bulles. Toutefois, ce brevet ne vise que les produits liquides et n'apporte aucun enseignement sur la préparation de produit, à base de sucre cristallisé,

moulés en morceau.

Le terme sucre se rapporte à tout mono- ou disaccharide classique ainsi qu'à leur mélange. Le sucre constituant le sirop peut être différent du sucre cristallisé du produit alimentaire.

On peut choisir en particulier le sucre constituant le sirop parmi les saccharose, glucose, sucre inverti et lactose, et pour le sucre cristallisé le saccharose ou le fructose.

En effet, lorsqu'on met l'APM en suspension dans des solutions de titre croissant de saccharose dans l'eau, on obtient avec la montée du Brix, des suspensions de plus en plus stables et manipulables pouvant être parfaitement pesées, pompées, diluées, incorporées à d'autres produits. Ceci est valable pour une quantité d'APM ne dépassant pas 40 % de la masse de sirop.

Ce phénomène dépend directement de la quantité d'eau disponible dans la solution, non liée au sucre. En particulier pour le saccharose, à la limite de sa solubilité dans l'eau, à 66,6 Brix, il n'y a plus d'eau libre et pratiquement toutes les molécules d'eau sont associées à celles du sucre.

On constate effectivement, que la solubilité de l'APM dans une solution de sucre décroît avec l'augmentation de concentration en sucre. A 40 °C par exemple la solubilité de l'APM est de :

1,3 % dans l'eau pure
0,7 % dans une solution de saccharose à 40 Brix
0,4 % dans une solution de saccharose à 60 Brix

Par ailleurs, la stabilité chimique de l'APM dans une solution de sucre ou de sucre inverti est améliorée avec l'augmentation du Brix. On se rapporte à l'article de M. PRUDEL et E. DAVIDKOVA dans la Revue DIE NAHRUNG (Volume 25 de février 1981, pages 193 - 199) qui met en évidence l'influence favorable de ce facteur, surtout à Brix élevé : à 60 Brix, la stabilité (exprimée en temps de demi-vie) est 1,7 fois plus forte que dans l'eau à conditions de température et de PH équivalentes. Ce point a été confirmé et on a pu constater qu'il n'y avait pas de dégradation apparente en 50h à 40 °C, dans des solutions de sacchrarose de 60 Brix à PH6. Il en est de même dans des solutions de sucre inverti.

Comme pour toute solution sucrée, il convient de prendre toutes les précautions nécessaires pour éviter ou réduire les contaminations bactériologiques. On s'attachera à avoir toujours une activité hydrique de l'eau (Aw) la plus faible possible.

La stabilité mécanique d'une suspension d'APM dans une solution de sucre n'est pas constante dans le temps, surtout aux faibles Brix : elle varie dans l'intervalle de quelques minutes à 8 jours (cas de 60 Brix pour le saccharose) au bout desquels on assiste à une amorce de décantation de la dispersion. S'il s'avère nécessaire de garder longtemps des suspensions de ce type, l'adjonction de gommes (xanthanes par exemple) suffit à assurer au milieu une viscosité adéquate pour éviter tout phénomène de séparation et de décantation. Des doses <0,1 % de xanthanes sont suffisantes pour des sirops de 40 Brix et au delà.

De même on peut ajouter à l'eau du sirop tout additif soluble.

Le procédé, conformément à l'invention, se divise donc en trois étapes : la première qui constitue l'étape essentielle, consiste en la préparation d'un prémix (terme équivalent à prémélange), la deuxième consiste à mélanger ce prémix avec le produit alimentaire à base de sucre cristallisé, la troisième consiste à mouler le mélange obtenu.

Le prémix est réalisé de la façon suivante :

— On prépare une solution ou sirop de sucre concentré ; de préférence, la concentration de sucre dans le sirop est comprise entre 60 % et 100 % de sa saturation ce qui correspond pour le saccharose à un intervalle compris entre 40 et 66 Brix à 20 °C.

— On introduit la substance, l'APM en l'occurence, en poudre et on la disperse par tout moyen d'agitation et de répartition manuel ou mécanique, de manière à obtenir un prémix sous forme d'une suspension de cette substance dans le sirop.

Dans ce prémix les quantités en jeu de ladite substance, de l'eau, et donc du sirop, sont directement fonction de la composition finale du produit que l'on désire fabriquer. D'une manière générale la quantité de ladite substance doit être au plus égale à 40 % de la masse de sirop.

— On parfait, si nécessaire, la dispersion par un traitement mécanique intense du type broyeur à segments (stephan) ou tout autre appareil similaire en contrôlant la montée éventuelle de température. Ce traitement a pour effet de réduire les agrégats de la substance, formés au contact d'un milieu liquide, en particules simples. On constate que dans le sirop, les agrégats ne se reforment plus.

On obtient ainsi un prémix sous forme d'une suspension stable homogène, plus ou moins épaisse et visqueuse et qui peut être diluée ultérieurement dans une poudre.

On peut incorporer d'autres produits au sirop de sucre tels que colorants, arômes, additifs divers, solubles ou non solubles dans l'eau ou dans le sirop de façon à confectionner des prémixs complexes.

De même on peut utiliser un mélange de sucre + sucre inverti... De même l'addition de bactériostatique (par exemple : sorbate) contribue à stabiliser le prémix en vue de son stockage.

De même, il est possible d'ajouter des agents solubilisants minéraux de l'APM du type sulfate acide de sodium ou potassium tels qu'ils figurent dans le brevet Européen 0 109 685.

Pour la deuxième étape on incorpore le prémix à la masse au produit alimentaire à base de sucre cristallisé dans un mélangeur mécanique approprié, garantissant une bonne répartition, tout en évitant l'érosion des cristaux de sucre.

La dernière étape du procédé consiste à mouler sous forme de morceaux le mélange obtenu. La quantité d'eau nécessaire est apportée par le prémix lui-même, et on peut utiliser pour cette opération les groupes de moulage-séchage du type Chambon ou toute autre technique classique de la sucrerie.

Les exemples suivants, relatifs à l'aspartame, illustrent la méthode d'incorporation.

a) Réalisation d'un prémix à base de sucre et aspartame

Dans un mélangeur planétaire, on introduit 4,920 Kg d'APM et on verse en filet 20,08 kg d'un sirop de saccharose à 65,5 Brix. Après imbibition et mélange manuel grossier, on assure une bonne dispersion par l'agitation mécanique pendant 15 minutes.

Ce mélange est transféré dans un broyeur à recyclage type MICROCUT STEPHAN dans lequel il est traité pendant 3 minutes, la température ne dépassant pas 40 °C. Un examen microscopique ultérieur confirme que les agrégats n'existent plus. Le prémix ainsi obtenu est stocké dans un récipient fermé. Sur deux échantillons prélevés et analysés par HPLC (spectro à 257 mm), on trouve les résultats suivants pour la teneur en APM :

| | |
|---|---|
| Théorique | 19,68 % |
| Echantillon 1 | 19,64 % |
| Echantillon 2 | 19,29 % |

b) Réalisation de minisucres en morceaux basse calories

La synergie du sucrose et de l'APM est un phénomène connu. Dans le cadre de la recherche de nouveaux produits de pouvoir calorique allégé à proposer au consommateur pour des raisons de santé et de diététique, on propose des sucres cubes de petit format, contenant de 0,5 % à 2 % d'APM et garantissant à l'utilisateur une énergie absorbée de l'ordre de 50 % à 20 % de celle qu'il aurait dû ingérer sous forme de sucre pour avoir le même pouvoir sucrant. Ces produits sont différents par essence des comprimés existant déjà sur le marché.

Le procédé a été appliqué à la réalisation de sucres en morceaux suivant la technique classique des mouleuses à sucre, à savoir moulage d'un sucre de granulométrie donnée et d'humidité allant de 0,8 à 2 % ; 1,1 à 1,5 % en général.

Le prémix réalisé en a) est incorporé dans 300 kg de sucre cristallisé qualité n° 1 de granulométrie identique à celle utilisée pour le moulage de morceaux classiques. L'appareil est un malaxeur vertical inox avec agitation par bras mécanique en fond de cuve d'un volume de 500 litres. Le sucre est chargé par balance automatique, le fût de prémix est vidé soigneusement. Le mélange est assuré pendant 15 minutes, la température du produit ne dépassant pas 40 °C. Le produit solide ainsi obtenu est apte à être moulé directement sur un groupe de moulage classique. Il peut aussi être stocké en récipient étanche pour utilisation ultérieure sans problème de mottage particulier.

Le produit ainsi obtenu répond à l'analyse théorique suivante :

| | |
|---|---|
| Sucre | 96,64 |
| APM | 1,38 |
| $H_2O$ | 1,98 |
| | 100,00 |

Sur 2 prélèvements, la teneur en APM mesurée est de 1,32 % et 1,33 %, la quantité d'eau introduite par la voie du sirop de sucre correspond aux nécessités du moulage.

On voit donc que la réalisation de ce mélange permet très facilement par la méthode revendiquée d'ajuster exactement la teneur de chacun des composants en jouant sur le Brix et sur la quantité de sirop.

Le mélange ainsi obtenu est moulé sur un groupe de moulage classique en sucrerie équipée de plaques de moulage aux dimensions voulues, dans le cas présent 15×11×6 mm (épaisseur réglable) et délivrant des sucres d'un poids moyen de 1,1 g. Après moulage et étuvage classiques, la composition moyenne théorique des sucres est de :

| | |
|---|---|
| Sucre | 98,34 |
| APM | 1,41 |
| $H_2O$ | (mesuré expérimentalement) 0,25 |
| | 100,00 |

soit pour un « minisucre » de 1,1 g, un dosage de 15,47 mg d'APM.

La répartition statistique des poids des « minisucres » est conforme et identique à celle d'un groupe de moulage normal ainsi que la cadence de la machine ce qui signifie que le mélange ne se comporte pas

différemment d'un sucre pur humide.

Sur une série de morceaux, on a fait des dosages d'APM pour vérifier la bonne répartition du principe actif.

Sur 20 morceaux dosés individuellement, la moyenne des dosages APM est de 1,35 % + 0,03 ce qui donne une déviation standard relative de 2,22 %.

Les pertes observées correspondent aux pertes normales de fabrication : pertes par entraînement de poussière d'APM solide, pertes au transvasement, pertes en machine. La recherche de dicétopipérazine, principal produit de la décomposition de l'APM, s'est toujours révélée négative, à toutes les étapes du procédé.

c) Réalisation de sucres en morceaux à pouvoir sucrant renforcé

En reprenant le mode opératoire a), on a réalisé un prémix contenant les ingrédients suivants :

| | |
|---|---|
| Sirop de sucre à 65,3 Brix | 21,87 kg |
| APM | 7,40 kg |

La composition théorique du prémix est de :

| | |
|---|---|
| Sucre | 48,79 |
| APM | 25,29 |
| $H_2O$ | 25,92 |
| | 100,00 |

Conformément au mode opératoire b), on a prélevé 25,700 kg de ce prémix qui ont été incorporés à 300 kg de sucre pour moulage.

Le mélange à mouler avait la composition théorique suivante :

| | |
|---|---|
| Sucre | 95,96 |
| APM | 2,00 |
| $H_2O$ | 2,04 |
| | 100,00 |

Le mélange est moulé en morceaux correspondants à un calibre N° 6 (dimensions 27,5×17,5×11, épaisseur réglable).

Après étuvage, l'humidité mesurée expérimentalement est de 0,45 %. La composition moyenne des sucres est de :

| | |
|---|---|
| Sucre | 97,52 |
| APM | 2,03 |
| $H_2O$ | (mesurée) 0,45 |
| | 100,00 |

La qualité de la production a été testée sur plusieurs séries de 20 morceaux individuellement analysés. Les résultats d'une série de 20 morceaux pour une compression donnée sont donnés ci-dessous :

— en terme de régularité de poids des morceaux

poids moyen = 3,53 g + 0,09 soit une déviation standard relative de 2,55 %

— en terme de teneur en APM

teneur moyenne = 1,87 % + 0,04 soit une déviation standard relative de 2,14 %

Ces valeurs confirment la répartition satisfaisante des poids unitaires des morceaux ainsi que la bonne répartition de l'APM dans le mélange pour moulage. Il reste néanmoins une différence entre la teneur mesurée d'APM (1,87 %) et la teneur théorique (2,02 %). Cette différence n'est pas due à une dégradation de l'APM, car on a vérifié l'absence totale de dicétopipérazine dans les produits. Elle s'explique, par outre les pertes de fabrication, un décalage systématique par défaut de la méthode de dosage employée.

Compte tenu de l'absence de tout produit secondaire, il reste que la méthode proposée permet de fournir des produits dans lesquels l'APM est régulièrement réparti. La méthode de moulage assurant des

poids individuels constants, on peut ainsi prévoir des conditions expérimentales telles que l'on puisse garantir des poids de principes actifs constants dans des morceaux de sucre.

En particulier, on est capable de garantir une concentration suffisamment constante et précise pour que cette méthode de dispersion puisse être utilisée pour répartir des principes actifs dans des morceaux de sucre en garantissant une dose donnée de principes actifs par morceau de sucre. On pense ainsi proposer une nouvelle forme de support de médicament.

d) Préparation de sucres en morceaux permettant la réalisation de boisson hypocalorique arôme citron

Conformément au § a) on a réalisé un prémix concentré de boisson au citron.

Dans un mélangeur planétaire ou équivalent en inox, on place 101,2 g d'APM, on verse 298,89 g de sirop à 65,3 Brix, on mélange doucement en première vitesse pour débuter puis on passe en deuxième vitesse pour parfaire l'homogénéisation.

Ce prémix est ensuite passé dans un broyeur à segments pour dilacérer les petits agrégats d'APM formés au contact du sirop. Le prémix ainsi fabriqué est conservé pour utilisation ultérieure.

Dans un malaxeur à agitateur en fond de la cuve d'agitation, on charge les produits suivants :

| | |
|---|---|
| sucre poudre de raffiné | 150 g |
| maltodextrines | 54 g |
| gomme arabique purifiée tamisée | 59 g |
| acide ascorbique | 1 g |
| acide citrique | 25 g |

On mélange à sec pendant 3 minutes à vitesse lente. Par ailleurs, on mélange grossièrement, mais extemporanément dans un récipient que l'on videra totalement dans le mix pulvérulent :

| | |
|---|---|
| — prémix préparé ci-dessus | 35 g |
| — arôme citron synthétique type « Firmenich » 51124 A | 3 g |

On malaxe l'ensemble 3 minutes à petite vitesse et on ajoute le complément de :

| | |
|---|---|
| — sucre poudre de raffiné soit | 150 g |
| On obtient une charge totale de | 477 g |

On malaxe pendant 3 minutes en petite vitesse puis 10 minutes en grande vitesse.

On obtient ainsi un mélange homogène dans lequel l'APM est régulièrement distribué ainsi que les autres constituants.

La composition en % du mélange est :

| | |
|---|---|
| sucre poudre | 66,47 % |
| maltodextrine | 11,32 % |
| gomme arabique purifiée | 12,37 % |
| acide ascorbique | 0,21 % |
| acide citrique | 5,24 % |
| arôme citron synthétique « Firmenich 51124 A » | 0,63 % |
| eau | 1,90 % |
| APM | 1,86 % |
| | 100,00 % |

Ce mélange est enfin moulé suivant la technique sucrière habituelle pour obtenir des morceaux d'environ 5 g.

Deux morceaux donnent une boisson agréable dans 250 ml d'eau.

La boisson finale représente les caractères suivants pour 100 ml :

— Pouvoir calorique < 10,63 Kcal (par comparaison 100 ml « Coca-Cola Light » 5 Kcal)
— Pouvoir édulcorant 16,00 g d'équivalent saccharose
— PH 2,90 (Correspondant à un PH de bonne stabilité de l'APM)

Un colorant peut également être ajouté au sirop ou au mélange sec suivant sa solubilité dans l'eau.

La méthode permet ainsi de préparer sous forme de morceau de sucre, un mélange homogène servant de boisson à préparer soi-même et qui peut être conditionné en enveloppage individuel correspondant à une dose donnée.

La fabrication d'une boisson allégée est ainsi réalisée facilement.
L'exemple suivant reprend cette application en la perfectionnant.

e) Sucres morceaux comme supports d'arômes pour préparation de boisson instantanée allégée, pétillante.

— Réalisation d'un prémix
Dans un mélangeur planétaire ou équivalent en inox, on place 180 g d'APM sur lequel on verse 520 g de sirop de sucre froid à 65,3 Brix en filet et on mélange doucement en première vitesse pour débuter. On passe en deuxième vitesse pour parfaire l'homogénéisation.
Ce prémix est ensuite passé dans un broyeur à segments pour dilacérer les petits agrégats d'APM formés au contact du sirop.
— Réalisation du mix
On place dans un malaxeur à agitateur inox les ingrédients solides suivants :

| | |
|---|---|
| — sucre de granulométrie adaptée au moulage (Sucre A) | 300 g |
| — acide citrique | 55,5 g |
| — gomme xanthane | 7,4 g |
| — gomme arabique purifiée tamisée | 7,4 g |
| — bicarbonate de soude | 18,2 g |

On mélange à sec pendant 3 minutes.
Par ailleurs, on mélange intimement, extemporanément les ingrédients suivants (à température de 20 à 25 °C) :

| | |
|---|---|
| — prémix | 65,4 g |
| — « Riboflavine Roche » (vit. B2) | 0,6 g |
| — arôme citron synthétique « Firmenich 51124 A » | 3,7 g |
| | 69,7 g |

On vide totalement ce mélange dans le mix pulvérulent, on malaxe pendant 3 minutes puis on ajoute 300 g de sucre A et on malaxe 3 minutes en première vitesse, 10 minutes en deuxième vitesse.
Le mélange peut être moulé sur groupe de moulage classique de sucrerie en calibre 6 (poids unitaire 3,4 g).
Les sucres, après moulage, doivent subir un étuvage à température inférieure à celle normalement pratiquée (60°-70 °C) et ne pas dépasser 40 °C pour éviter l'entraînement de l'arôme, très volatil.
L'étuvage en fait sera adapté à la qualité et aux caractéristiques des arômes utilisés dans ce genre de procédé.
La composition d'un morceau de sucre de 3,4 g est la suivante :

| | | |
|---|---|---|
| — sucre | 2,6911 g | 79,15 % |
| — APM | 0,0750 g | 2,21 % |
| — « Riboflavine » | 0,0027 g | 0,08 % |
| — arôme citron | 0,0166 g | 0,49 % |
| — acide citrique | 0,2490 g | 7,32 % |
| — gomme xanthane | 0,0330 g | 0,97 % |
| — gomme arabique | 0,0330 g | 0,97 % |
| — bicarbonate de soude | 0,0820 g | 2,41 % |
| — sirop de sucre 65,3 B | 0,2176 g | 6,40 % |
| sucre total 2,8332 g | | 83,33 % |

Introduit dans un verre contenant 100 ml d'eau froide, le dégagement de $CO_2$ aide le morceau de sucre à se déliter. La dissolution complète du sucre est cependant aidée par agitation à la cuillère.
100 ml de boisson finale ont un pouvoir calorique de 11,3 Kcal et un pouvoir sucrant équivalent à 16,33 g de saccharose.

## Revendications

1. Procédé pour réaliser un produit alimentaire à base de sucre cristallisé, se présentant sous forme de morceaux moulés et contenant une substance telle que l'aspartame de faible solubilité dans l'eau, caractérisé en ce qu'il consiste à préparer une suspension homogène de ladite substance dans un sirop de sucre dont la concentration est comprise entre 60 % et 100 % de la saturation, à mélanger cette

suspension avec du sucre cristallisé, enfin à mouler en morceaux et étuver le mélange obtenu selon la technique sucrière connue en soi, l'eau dans le mélange étant apportée essentiellement par le sirop en quantité correspondant aux nécessités du moulage, et le dosage de la substance dans la suspension étant déterminé en fonction de son dosage dans les morceaux.

2. Procédé selon la revendication 1, caractérisé en ce que la quantité de ladite substance est au plus égale à 40 % de la masse de sirop.

3. Procédé selon l'une des revendications 1 à 2, caractérisé en ce qu'on fait subir à la suspension un traitement mécanique destiné à réduire les agrégats de la substance éventuellement formés lors de son incorporation.

4. Procédé selon l'une des revendications précédentes, caractérisé en ce qu'on incorpore dans le sirop au moins un additif compris en particulier dans le groupe : colorant, arôme, agent bactériostatique, agent solubilisant minéral de ladite substance, gomme.

5. Procédé selon l'une des revendications précédentes, caractérisé en ce que le sucre constituant le sirop est au moins un des éléments compris dans le groupe : saccharose, glucose, sucre inverti, lactose.

6. Procédé selon l'une des revendications précédentes, caractérisé en ce que le sucre cristallisé est le saccharose ou le fructose.

7. Procédé selon l'une des revendications 1 à 5, caractérisé en ce que le produit alimentaire moulé est un mélange pour boisson à arôme de fruit à préparer soi-même, ledit arôme étant incorporé dans la suspension.

8. Procédé selon l'une des revendications précédentes caractérisé en ce que l'on incorpore entre 0,5 % et 2 % d'aspartame par morceau.

## Claims

1. Process for the production of a food product based on granulated sugar which is in the form of shaped pieces and contains a substance such as aspartame of low solubility in water, characterized in that it consists in preparing a homogeneous suspension of the said substance in a sugar syrup the concentration of which is between 60 % and 100 % of saturation, in mixing this suspension with granulated sugar and finally in shaping into pieces and drying the mixture obtained using the technique for sugar, which is in itself known, the water in the mixture being essentially introduced by the syrup in a quantity corresponding to the needs of shaping and the dosage of the substance in the suspension being determined as a function of its dosage in the pieces.

2. Process according to Claim 1, characterized in that the quantity of the said substance is at most equal to 40 % of the mass of syrup.

3. Process according to one of Claims 1 to 2, characterized in that the suspension is subjected to a mechanical treatment intended to reduce the aggregates of the substance which may have been formed during its incorporation.

4. Process according to one of the preceding claims, characterized in that at least one additive included in particular in the group : colorant, flavouring, bacteriostatic agent, inorganic solubilizing agent of the said substance and gum, is incorporated in the syrup.

5. Process according to one of the preceding claims, characterized in that the sugar constituting the syrup is at least one of the items included in the group : sucrose, glucose, invert sugar and lactose.

6. Process according to one of the preceding claims, characterized in that the granulated sugar is sucrose or fructose.

7. Process according to one of Claims 1 to 5, characterized in that the shaped food product is a mixture for a fruit flavour drink to be prepared by the user, the said flavouring being incorporated in the suspension.

8. Process according to one of the preceding claims, characterized in that between 0.5 % and 2 % of aspartame is incorporated per piece.

## Patentansprüche

1. Verfahren zur Herstellung eines Nahrungsmittelproduktes auf Basis von kristallisiertem Zucker, das die Form von abgeformten Stücken aufweist und eine Substanz geringer Wasserlöslichkeit wie z. B. Aspartam enthält, dadurch gekennzeichnet, daß es darin besteht, eine homogene Suspension der erwähnten Substanz in einem Zuckersirup herzustellen, dessen Konzentration zwischen 60 und 100 % Sättigung liegt, diese Suspension mit kristallisiertem Zucker zu vermischen, das erhaltene Gemisch schließlich in Stücken abzuformen und zu dämpfen gemäß der an sich bekannten Zuckerverarbeitungstechnik, wobei das Wasser in dem Gemisch hauptsächlich durch den Sirup in einer Menge, die den Bedingungen der Abformung entspricht, bereitgestellt wird und wobei die Dosierung der Substanz in der Suspension in Abhängigkeit zu seiner Dosierung in den Stücken bestimmt wird.

2. Verfahren nach Anspruch 1, dadurch gekennzeichnet, daß die Menge der erwähnten Substanz höchstens gleich 40 % der Sirupmasse ist.

3. Verfahren nach einem der Ansprüche 1 und 2, dadurch gekennzeichnet, daß man die Suspension einer mechanischen Behandlung unterwirft zur Reduzierung der Aggregate der Substanz, die eventuell bei dessen Einarbeitung gebildet worden sind.

4. Verfahren nach einem der vorhergehenden Ansprüche, dadurch gekennzeichnet, daß man in den Sirup mindestens ein Additiv, insbesondere aus der folgenden Gruppe einarbeitet: Farbstoff, Aroma, Bakteriostatikum, mineralisches Solubilisierungsmittel für die erwähnte Substanz, Gummi.

5. Verfahren nach einem der vorhergehenden Ansprüche, dadurch gekennzeichnet, daß der Zucker für den Sirup mindestens eines der Elemente der folgenden Gruppe ist: Saccharose, Glucose, Invertzucker, Lactose.

6. Verfahren nach einem der vorhergehenden Ansprüche, dadurch gekennzeichnet, daß es sich bei dem kristallisierten Zucker um Saccharose oder Fructose handelt.

7. Verfahren nach einem der Ansprüche 1 bis 5, dadurch gekennzeichnet, daß das abgeformte Nahrungsmittelprodukt ein Gemisch für ein Getränk mit einem Fruchtaroma ist, das von einem selbst zubereitet werden kann, wobei das erwähnte Aroma in die Suspension eingearbeitet wird.

8. Verfahren nach einem der vorhergehenden Ansprüche, dadurch gekennzeichnet, daß man pro Stück zwischen 0,5 und 2 % Aspartame einarbeitet.